# EUROPÄISCHE PATENTANMELDUNG

(11) **EP 1 860 572 A1**
(43) Veröffentlichungstag der Anmeldung: **28.11.2007**
(21) Anmeldenummer: 07106052.9
(22) Anmeldetag: 12.04.2007
(51) Int. Cl.: G06F 17/00, G05B 23/02, G07C 3/00

(54) **Verfahren zur Erfassung von Mängelangaben**

(30) Priorität: 23.05.2006 DE 102006024240
(71) Anmelder: SIEMENS AKTIENGESELLSCHAFT, 80333 München (DE)
(72) Erfinder: Gotthardt, Klaus-Jürgen, 91093 Hessdorf (DE); Fischer, Günther, 91077 Neunkirchen (DE); Gunselmann, Walter, 91074 Herzogenaurach (DE); Kister, Andreas, 38122 Braunschweig (DE); Kroll, Manfred, 91058 Erlangen (DE); Krämer, Robert, 12045 Berlin (DE); Lutz, Peter, 91074 Herzogenaurach (DE); Nouvortne, Olaf, 91054 Erlangen (DE); Tiedemann, Joachim, 91077 Hetzles (DE)

(57) **Zusammenfassung**

Die Erfindung betrifft ein Verfahren zur Erfassung von Mängelangaben, die für die Instandhaltung eines Objektes zu berücksichtigen sind.

Der Erfindung liegt die Aufgabe zugrunde, ein System zu schaffen, mit dem eine Mängelauflistung für bestimmte Objekte oder Objektzusammenstellungen, die einen Verbund bilden können, einfach, schnell und zuordnungssicher möglich ist.

Gelöst wird diese Aufgabe erfindungsgemäß dadurch, dass zunächst Daten einer für das Objekt spezifischen Kennung, insbesondere von einem dem Objekt zugeordneten RFID-Chip, automatisch in ein elektronisches Speichersystem übernommen werden, denen dann visuell an einem Objekt ermittelte und in das Speichersystem eingegebene Mängel in Datenform zugeordnet werden.

## Beschreibung

Die Erfindung betrifft ein Verfahren zur Erfassung von Mängelangaben, die für die Instandhaltung eines Objekts zu berücksichtigen sind, sowie ein System hierfür.

Unter dem Begriff Instandhaltung sollen hier im Wesentlichen die zur Ausführung von der Wiederherstellung des vollständigen Betriebszustandes eines Objektes dienenden Arbeiten verstanden werden.

Die Radio Frequency Identification - kurz RFID genannt - ist eine Technologie, die zunehmend angewandt wird bei der Logistik, wobei der Grundgedanke der Anwendung darin liegt, dass Waren oder Objekte, mit elektronischen Funk-Chips (Tags) versehen werden, mit denen sich einerseits digitale Daten speichern lassen und die andererseits ein berührungsloses Auslesen der Daten ermöglichen. Hierzu werden dann entsprechende Sende- bzw. Leseverfahren angewandt.

Auf diese Weise lassen sich beispielsweise in Warenlagern die dort gelagerten Waren erfassen, verwalten oder auch für eine Entnahme selektieren.

Wesentlich ist dabei, dass die Kontaktaufnahme zu der Ware oder dem Objekt nicht visuell oder auch manuell erfolgen muss, sondern dass dies berührungslos, auch über bestimmte Entfernungen hinweg, möglich ist. Die mögliche Entfernung wird dabei durch das verwendete Funksystem selbst und/oder die gesetzlichen Bestimmungen für das jeweilige Funksystem vorgegeben.

Die oben beschriebene RFID Technologie lässt eine logistische Materialflussüberwachung problemlos zu, wobei die einem Objekt zugeordneten spezifischen Daten dieses ständig begleiten.

Betrieblich ergeben sich dadurch erhebliche logistische Vorteile, die dann wiederum zu beträchtlichen Kosteneinsparungen führen können. Dies soll aber hier nicht weiter betrachtet werden.

Unabhängig davon sind bei Fahrzeugen, beispielsweise in der Autobranche, Diagnosesysteme bekannt, die es u.a. einer Werkstatt ermöglichen, zumindest vorab ohne eine visuelle Kontrolle, den Fahrzeugzustand zu überprüfen. Probleme an Verschleißteilen oder Antriebsaggregaten lassen sich damit ohne großen Aufwand diagnostizieren, so dass der Aufenthalt in einer Werkstatt verringert werden kann. Dies hat, selbstverständlich auch in Bezug auf die Kosten, die durch einen Werkstattaufenthalt entstehen, einen Einfluss.

Diese Systeme setzen voraus, dass auch entsprechende Schnittstellen oder Sensoren an den jeweiligen zu überwachenden Ausrüstungsteilen oder Objekten vorhanden sind. Dann können die Defekte dieser Teile elektronisch gespeichert und beispielsweise einem Instandhaltungssystem - Maintenance-Manage-System - weitgehend automatisiert zur Auswertung zur Verfügung gestellt werden.

Abweichend von der RFID Technologie, erfolgt aber bei den Diagnoseverfahren in der Regel eine kontaktbehaftete Verbindung zwischen dem Diagnosegerät und den an die einzelnen Objekte oder Aggregate angeschlossenen Sensoren.

Fahrzeugmängel, die nicht durch das Onboard-Diagnosesystem erfassbar sind, werden händisch registriert, wobei dies in der Regel durch Eintrag in Mängellisten, abgeleitet aus Mängelcodebüchern mit teilweise bis zu 50 Seiten und mehr, Datenspeicherverfahren mit und ohne Datenfernübertragung oder unstrukturiert über handschriftliche Aufzeichnungen erfolgt.

Der Erfindung liegt die Aufgabe zugrunde, ein System zu schaffen, mit dem eine Mängelauflistung für bestimmte Objekte oder Objektzusammenstellungen, die einen Verbund bilden können, einfach, schnell und zuordnungssicher möglich ist.

Gelöst wird diese Aufgabe erfindungsgemäß mit den Merkmalen des Patentanspruchs 1, und zwar dadurch, dass zunächst Daten einer für das Objekt spezifischen Kennung in ein elektronisches Speichersystem übernommen werden, denen dann visuell an einem Objekt ermittelte und in das Speichersystem eingegebene Mängel in Datenform zugeordnet werden.

Hierbei soll die spezifische Kennung für das Objekt von einem dem Objekt zugeordneten RFID Chip berührungslos auf das elektronische Speichersystem übertragen werden.

Die Daten der spezifischen Kennung des Objektes sollen insbesondere dessen Art, Eigenschaften, Bestandteile und Ausgestaltungen, sowie eine eindeutige örtliche Zuordnung zu einem Gesamtsystem, in dem sich das Objekt befindet, umfassen.

Der Grundgedanke, der die Erfindung kennzeichnet, ist darin zu sehen, dass bisher mögliche Fehler bei der händischen Mängelerfassung vermieden werden sollen.

Ein ganz entscheidender Fehler war, dass unter Umständen keine richtige Zuordnung der Mängel zu einem bestimmten Objekt später möglich war, weil beispielsweise keine eindeutige oder auch eine fehlerhafte Ortserkennung für das bestimmte Objekt festgehalten worden war.

Erfindungsgemäß ist nun jedem Objekt eine spezifische Kennung zugeordnet und diese befindet sich in Form von elektronischen Daten auf dem RFID Chip. Werden diese Daten aufgenommen, so ist das Objekt eindeutig definiert, so dass diesem Objekt dann reproduzierbar erfasste Mängel zugeordnet werden können. Jegliche Verwechselung mit einem anderen Objekt ist ausgeschlossen.

Dieses Verfahren kann nun in zwei Varianten ausgeführt werden.

Bei einer sehr preiswerten Variante ist als RFID Chip ein passives Chip vorgesehen.
Derartige Chips oder Tags haben keine eigene Energieversorgung und benötigen auch nur einen vergleichsweise geringen Speicherplatz. Auf diesem Chip ist die das Objekt betreffende spezifische Kennung abgelegt. Ein derartiger Chip oder Tag kann problemlos bei der Fertigung des Objektes an diesem angebracht werden, wobei es nicht von Bedeutung ist, ob dieser später noch zugänglich ist oder nicht, weil diese Art von Chip wartungsfrei ist und auch hinsichtlich seiner Lebensdauer der des Objektes gleich zusetzen ist.

Die darauf abgelegte spezifische Kennung ist einmalig für dieses Objekt vergeben. Damit sind Fehler bei einer Zuordnung vollständig ausgeschlossen.

Bei der zweiten Variante des Verfahrens ist als RFID Chip ein aktiver, über eine eigene Energieversorgung verfügender, Chip vorgesehen.
Diese Variante ist somit etwas Kosten aufwändiger, bietet aber eine wesentlich größere Funktionalität. Selbstverständlich ist auch in diesem Fall die für das Objekt spezifische Kennung auf dem Chip abgelegt.
Bei diesem Verfahren werden die Mängelangaben in Form von speicherbaren Daten mittels eines Eingabegerätes berührungslos auf einen dem Objekt zugeordneten RFID-Chip (Tag) aufgegeben und sind zu einem anderen Zeitpunkt mittels eines Lesegerätes berührungslos vom Chip abrufbar.

Auch hierbei geht es nicht um die Feststellung eines Mangels an sich, denn diese erfolgt durch eine Person, sondern um die Speicherung, also das Festhalten von festgestellten Mängeln und die Weitergebbarkeit dieser Mängel für eine nachfolgende oder spätere Verwendung oder Berücksichtigung.

Durch den Einsatz der RFID (Radio Frequency Identification) Labels (Tags), die einem bestimmten Objekt direkt zugeordnet sind, kann in beiden Fällen eine automatisierte Mängeleingabe kostengünstig und qualitätsgesichert erfolgen. Die RFID-Tag-Speicherinhalte beschreiben den entsprechenden Einbauort mit seinen spezifischen Objekten. Mithilfe eines elektronischen Lese- und Eingabegerät (PDA- Personal Digital Assistant) werden die RFID-Tags gelesen, deren Inhalt korrespondiert zu einer entsprechenden graphischen PDA-Oberfläche. Durch Anwahl (Touch/Cursor) der defekten Komponente wird der entsprechende Mängelcode mit eventuell zusätzlichen Informationen gespeichert. Die Übertragung der gespeicherten Mängel kann dann beispielsweise über Datenfernübertragungsverfahren (WLAN, GSM, etc) direkt vom PDA zu einem Instandhaltungssystem (MMS) in einem geeigneten Format (z.B. XML) erfolgen und steht damit im MMS zur weiteren datentechnischen Bearbeitung bereit.

Durch den Einsatz von RFID-Chips (Labeln) in Verbindung mit PDA und datentechnischer Koppelung mit einem MMS wird eine Lösung vorgeschlagen, die den Vorgang der bisher händischen Mängelerfassung weitgehend automatisiert.

Um später eine eindeutige Identifizierung bzw. Auswertung zu ermöglichen sollten auf dem Chip auch von den eigentlichen Mängelangaben unabhängige Angaben speicherbar sein, so beispielsweise eine Datumsangabe.
Durch diese Ausgestaltungen ist eine sichere Zuordnung der erfassten Mängel zu den jeweiligen Objekten gewährleistet.

Nach weiteren Ausgestaltungen der Erfindung kann die Struktur des Objektes zusammen mit oder unabhängig von einem Mängelcode auf dem Chip gespeichert sein. Ferner kann sich die Identifikation für das einzusetzende Software-Modul zur Mängeleingabe auf dem Chip gespeichert befinden.

Schließlich könnte auch die zur Eingabe erforderliche Maskenstruktur schon auf dem Chip abgespeichert sein.

Vorstehend wurde der allgemeine Begriff Objekt gewählt. Hierbei kann es sich um eine oder einen Teil einer stationäre(n) Anlage oder Einrichtung handeln.

Besonders vorteilhaft ist das Verfahren aber für Fahrzeuge, insbesondere Schienenfahrzeuge einsetzbar, und zwar besonders an oder für ein Personen beförderndes Schienenfahrzeug, wozu Reisezugwagen gehören.

In diesen werden häufig durch Vandalismus erhebliche Beschädigungen verursacht, deren Erfassung nicht nur aus optischen, sondern auch aus Sicherheitsgründen notwendig ist. Um die Mängel schneller und einfacher zu erfassen, ist dem Objekt ein RFID Chip direkt zugeordnet. Objekt kann dabei beispielsweise ein Sitzplatz oder eine Sitzplatzanordnung sein.

Weiterhin kann das Objekt eine oder ein Teil einer sanitäre(n) Anlage oder Einrichtung oder auch beispielsweise die Verglasung des Fahrzeuges sein.

Besonders vorteilhaft ist es in diesem Zusammenhang, wenn zusätzlich zu den Mängelangaben ein Fotodokument auf den Chip übertragbar und dort abrufbar gespeichert ist.
Damit lassen sich dann Beschädigungen nicht nur im Rahmen vorgegebener Codes charakterisieren, sondern auch optisch einwandfrei darstellen.

Für die schnelle Erfassung, Weitergabe und Beseitigung von Mängeln ist es besonders vorteilhaft, wenn die mit einem Lesegerät vom Chip abrufbaren Daten direkt auf ein Instandhaltungssystem (MMS) übertragbar sind.

Schließlich ist es zweckmäßig, wenn die Inhalte des oder der Chips mit einer graphischen PDA-Oberfläche auf dem Lese- und Eingabegerät korrespondieren, weil dies ebenfalls zur Vereinfachung der Handhabung beiträgt.

Es ist durchaus auch möglich, dass der RFID Chip zusätzlich mit einem Sensor verbunden ist, der dann Defekte an einem Objekt, die von ihm registriert worden sind, auf den Chip überträgt, so dass diese auch berücksichtigt werden können.

Anhand eines fiktiven Reisezugwagens soll beispielhaft die technische Lösung dargestellt werden.
Dabei sind mehrere Sitze bzw. Sitzgruppen in einem Personenzugwagen angeordnet, wobei diese in Bezug auf die jeweiligen Fenster so positioniert sind, dass von Fensterachsen gesprochen werden kann.
RFID Chips oder Tags können den Fensterachsen, den Sitzgruppen, Gepäckablagen, der Beleuchtung, dem Fußboden bzw. den Fußbodenbelägen (Teppichen) usw. zugeordnet sein.
Weitere Tags können spezielle Fahrzeugdaten, z.B. die UIC-Fahrzeugnummer gespeichert enthalten.
Geht nun ein Bearbeiter oder Schaffner durch den Wagen, so können von ihm entdeckte Mängel an einzelnen Objekten mit Hilfe eines entsprechenden Gerätes (PDA) eingegeben werden. Dazu erhält der Bearbeiter auf seinem Gerät eine Menuführung, die im Tag abgelegt sein kann, mit Angaben zu den speziellen Objekten. Hierzu gehört außer z.B. der Fensterachse, die Kennzeichnung des Sitzplatzes oder der Sitzgruppe, und Angaben zu möglichen Mängeln, wie Verschmutzungen, Beschädigungen und dgl.
Durch einfache Anwahl (Touch/Cursor) wird der entsprechende Mängelcode im PDA gespeichert.
Wesentlich ist dabei, dass die erkannten Mängel somit eindeutig dem jeweiligen Objekt zugeordnet werden, weil der Bearbeiter zunächst automatisch von dem bestimmten Objekt die diesem zugeordnete spezielle Kennung erhält, die auf dem diesem Objekt zugeordneten RFID Chip gespeichert ist.

Wird gemäß der zweiten Variante ein aktiver Chip verwendet, so kann er die Mängelangaben auch auf dem Chip ablegen.
Dies hat den Vorteil, dass nicht nur eine zeitlich versetzte weitere Eingabe erfolgen kann, sondern auch von einem anderen Bearbeiter die zu speichernden Daten ergänzt werden können.

Weitere Chips können beispielsweise die Kennung des E-Schranks oder die des FIS-Schrankes enthalten.

Anschließend kann dann in Vorbereitung einer Instandsetzung oder auch zu Beginn eines Werkstattaufenthaltes über eine Datenfernübertragung an ein Instandsetzungssystem MMS ein entsprechendes Protokoll übertragen werden. Umfangreiche händisch geführte und im Allgemeinen auch nicht sehr übersichtliche Mängellisten entfallen damit. Dies trägt in erheblichen Umfang zu einer Vereinfachung des Instandsetzungsablaufes, verbunden mit einer entsprechenden Beschleunigung und selbstverständlich Reduzierung der Kosten bei.

## Patentansprüche

1. Verfahren zur Erfassung von Mängelangaben, die für die Instandhaltung eines Objektes zu berücksichtigen sind, **dadurch gekennzeichnet, dass** zunächst Daten einer für das Objekt spezifischen Kennung automatisch in ein elektronisches Speichersystem übernommen werden, denen dann visuell an einem Objekt ermittelte und in das Speichersystem eingegebene Mängel in Datenform zugeordnet werden.

2. Verfahren nach Anspruch 1, **dadurch gekennzeichnet, dass** die spezifische Kennung für das Objekt von einem dem Objekt zugeordneten RFID Chip berührungslos auf das elektronische Speichersystem übertragen werden.

3. Verfahren nach Anspruch 2, **dadurch gekennzeichnet, dass** die Daten der spezifischen Kennung des Objektes insbesondere dessen Art, Eigenschaften, Bestandteile und Ausgestaltungen, sowie eine eindeutige örtliche Zuordnung zu einem Gesamtsystem, in dem sich das Objekt befindet, umfassen.

4. Verfahren nach den Ansprüchen 1 bis 3, **dadurch gekennzeichnet, dass** als RFID Chip ein passiver Chip vorgesehen ist.

5. Verfahren nach den Ansprüchen 1 bis 3, **dadurch gekennzeichnet, dass** als RFID Chip ein aktiver, über eine eigene Energieversorgung verfügender, Chip vorgesehen ist.

6. Verfahren nach den Ansprüchen 1 bis 3 und 5, **dadurch gekennzeichnet, dass** die Mängelangaben in Form von speicherbaren Daten mittels eines Eingabegerätes berührungslos auf einen dem Objekt zugeordneten RFID-Chip (Tag) aufgegeben und zu einem anderen Zeitpunkt mittels eines Lesegerätes berührungslos vom Chip abgerufen werden.

7. Verfahren nach einem der vorstehenden Ansprüche, **dadurch gekennzeichnet, dass** auf dem Chip zusätzliche Informationen, wie eine Datumsangabe speicherbar sind.

8. Verfahren nach einem der vorstehenden Ansprüche, **dadurch gekennzeichnet, dass** die Struktur des Objektes zusammen mit einem Mängelcode auf dem Chip gespeichert ist.

9. Verfahren nach einem der vorstehenden Ansprüche, **dadurch gekennzeichnet, dass** sich die Identifikation für das einzusetzende Software-Modul zur Mängeleingabe auf dem Chip gespeichert befindet.

10. Verfahren nach einem der vorstehenden Ansprüche, **dadurch gekennzeichnet, dass** die zur Eingabe erforderliche Maskenstruktur auf dem Chip abgespeichert ist.

11. Verfahren nach einem der vorstehenden Ansprüche, **dadurch gekennzeichnet, dass** das Objekt eine oder ein Teil einer stationären Anlage ist.

12. Verfahren nach einem der vorstehenden Ansprüche, **dadurch gekennzeichnet, dass** das Objekt Teil eines Fahrzeuges, insbesondere eines Schienenfahrzeuges ist.

13. Verfahren nach Anspruch 12, **dadurch gekennzeichnet, dass** das Objekt ein Personen beförderndes Schienenfahrzeug ist.

14. Verfahren nach Anspruch 13, **dadurch gekennzeichnet, dass** das Objekt ein Sitzplatz oder eine Sitzplatzanordnung ist.

15. Verfahren nach Anspruch 13, **dadurch gekennzeichnet, dass** das Objekt eine oder ein Teil einer sanitäre(n) Anlage oder Einrichtung ist.

16. Verfahren nach Anspruch 13, **dadurch gekennzeichnet, dass** das Objekt die Verglasung eines Fahrzeuges ist.

17. Verfahren nach einem der vorstehenden Ansprüche, **dadurch gekennzeichnet, dass** zusätzlich zu den Mängelangaben ein Fotodokument auf den Chip übertragbar und dort abrufbar gespeichert ist.

18. Verfahren nach einem der vorstehenden Ansprüche, **dadurch gekennzeichnet, dass** die mit dem Lesegerät vom Chip abrufbaren Daten auf ein MMS übertragbar sind.

19. Verfahren nach einem der vorsehenden Ansprüche, **dadurch gekennzeichnet, dass** die Inhalte des oder der Chips mit einer graphischen PDA-Oberfläche auf dem Lese- und Eingabegerät korrespondieren.

20. Verfahren nach einem der vorstehenden Ansprüche, **dadurch gekennzeichnet, dass** der Chip zusätzlich mit einem Sensor koppelbar ist, der von ihm erfasste Defekte auf den Chip überträgt.

21. System zur Erfassung von Mängelangaben eines Objektes, **dadurch gekennzeichnet, dass** es aus einem dem Objekt zugeordneten RFID-Chip, einem elektronischen Speichersystem oder Eingabegerät für die Übernahme der vom Chip übertragenen Daten und der den festgestellten Mängeln entsprechenden Daten und deren Speicherung und einem Lesegerät besteht, mit dem die im Speichersystem und auf dem Chip gespeicherten Daten berührungslos abruf- und/oder weiterleitbar sind.
